# EUROPEAN PATENT SPECIFICATION

(11) **EP 0 537 183 B1**
(45) Date of publication and mention of the grant of the patent: **01.02.1995**
(21) Application number: 91910491.9
(22) Date of filing: 07.06.1991
(51) Int. Cl.: E01H 1/08, E01H 1/00

(54) **Cleaning Vehicle**
Reinigungsfahrzeug
Vehicule de nettoyage

(30) Priority: 08.06.1990 GB 9012787
(43) Date of publication of application: 21.04.1993
(73) Proprietor: SCHMIDT WINTERDIENST- UND KOMMUNALTECHNIK GmbH, D-79837 St Blasien (DE)
(72) Inventor: BRADLEY, Richard M., 30 Lavenham Court, Petersborough, Cambs. PE2 0AT (GB); THOMPSON, Peter G., Helpston, Petersborough PE6 9ED (GB); MATTHEWS, James, Peterborough PE3 6HL (GB); COOMBS, Edwin G., Orton Wistow, Peterborough PE2 0YY (GB)
(74) Representative: Grättinger, Günter
(86) International application number: EP9101064
(87) International publication number: WO9119048

(56) References cited:
- EP-A- 0 347 142
- WO-A-84/01398
- DE-A- 2 417 499
- US-A- 4 480 728

## Description

This invention relates to cleaning vehicles in accordance with independent claims 1, 2 and 8. An example of such a vehicle is a self-propelled vehicle for cleaning roads and/or runaways and/or pavements and/or carrying out industrial cleaning and sweeping operations. Such vehicles have suction gear including a suction nozzle with brush gear in the form of side brushes rotating about upwardly extending axes and serving to sweep matter laterally inwardly into the path of the nozzle.

More particularly, this invention relates to vehicle speed and control for cleaning vehicles as mentioned above. Cleaning vehicles of this kind have very particular requirements in relation to vehicle control. For example, during cleaning operations such as street sweeping, there is a need for extremely fine control of vehicle direction and speed so that thorough sweeping can be effected in narrow spaces such as between parked cars and up to plate glass windows of shop fronts.

Previously proposed vehicles of this kind provide excellent vehicle control in some respects, but fall short in others. For example, as described in WO-A-8401398 a hydrostatic drive transmission, which is connecting a power plant to the driven wheels, is comprising a drive transmission being a hydraulic transmission comprising a hydraulic pump drivable by said power plant, a hydraulic motor drivably connected to at least one driven wheel, and hydraulic lines interconnecting said pump and motor; said hydraulic transmission is controlled by control means operable by the driver to increase or decrease the power transmitted to said driven wheels, said hydraulic transmission being applied such as to give a braking effect to said driven wheels upon the driver moving said control means in a power-decreasing manner; and said hydraulic motor providing at least two modes of operation, namely a low speed mode and a higher speed mode and said motor being switchable from one mode to the other on-the-go.

This known vehicle offers the usual braking facilities which are available by virtue of the inherent characteristics of the hydraulic drive transmission.

With a known retarder brake control (US-A-4480728) two reference speeds a identified; above a first reference speed retarder braking is entirely hydrodynamic; between said first and a lower, second reference speed braking is partially hydrodynamic and partially frictional and only below the second reference speed retarder braking is smoothly transmitting to the service brakes of the vehicle.

However, the aspects of the performance of previous proposals which fall short of requirements include the provision of an instantly available higher transport speed for the vehicle when travelling between cleaning operations, more precise steering control of the vehicle during certain cleaning operations - while retaining the fundamental advantage of the hydraulic drive transmission which provides excellent speed control and versatility during low speed cleaning operations - and the need to meet legal braking requirements for these higher speeds, and the desirable feature that the control of the vehicle offering these increased facilities should be simple and thus easy and pleasant for the driver to effect.

There is a different type of cleaning vehicle, namely one of the adapted-truck kind. Truck-type sweepers are simply adapted conventional road trucks provided with sweeping gear. For example as described in EP-A-0347142 a split transmission is provided whereby for transport use the normal mechanical truck transmission is employed, while for sweeping operations, the mechanical transmission is disengaged and a pump driven by the vehicle engine serves to drive a hydraulic wheel motor whereby some of the operating characteristics of a hydraulic transmission are obtained for low speed sweeping operations.

However, such a split transmission arrangement inevitably involves considerable duplication of transmission construction, and inconvenience in operation. Obviously, the mechanical transmission has to be disengaged before the hydraulic transmission is engaged and vice versa. The vehicle needs to stop for these change-overs and this is clearly inconvenient and somewhat unacceptable.

The vehicle speed limit attainable by presently available hydraulic transmissions in cleaning vehicles of the type concerned is about 25 to 32 kilometres per hour (kph), but for transport of the vehicle between cleaning operations, there is a need for speeds up to about 80 kph or more. In order to reach these higher speeds, the presently available hydrostatic transmission is unsuitable and a legal requirement also arises in relation to braking. For this latter purpose, there is a need to provide an independent braking system to replace (at higher speeds) the braking provided by the hydrostatic transmission (which latter is legally and practically fully acceptable at lower speeds).

Accordingly, the provision of a transmission and braking system for a cleaning vehicle which retains the advantages of the previously proposed hydrostatic transmission for low speed cleaning operations, while meeting the requirement for a reasonable transport speed and also the legal requirements as to braking at these higher speeds, without imposing the complexities of a split hydrostatic/mechanical transmission and the inconvenience of stopping to switch the vehicle to its transport mode, represents a significant requirement in the art.

It is therefore an object of the present invention to provide a cleaning vehicle offering more convenient operation in terms of changing the speed of operation of the vehicle from one available range to the other, while meeting the requirements as to braking and steering of two or four wheels.

According to this aspect of the invention there is provided a cleaning vehicle as defined in claims 1 and 2 of the accompanying claims.

In a preferred embodiment, there is provided a cleaning vehicle having a hydrostatic transmission and a separate braking system. The hydrostatic drive motor has at least two operational modes, one for low speed cleaning operations and one for high speed transport mode. Speed responsive automatic change-over means is provided to change the braking control of the vehicle between that offered by the transmission and that of the further braking means, in accordance with vehicle speed.

In other advantageous embodiment said vehicle further comprises friction braking means providing an additional braking system for higher speed transit whilst not in cleaning operation and automatic change-over means being provided to change the braking mode from that created by said hydraulic transmission to the friction braking mode created by said additional braking system and said motor mode of operation either in response to changes in vehicle speed or selection of speed-related functions. During cleaning operations the hydrostatic drive itself provides single pedal speed and braking control. In the higher speed mode of the motor, hydrostatic braking is avoided when the driver lifts his foot from the speed control pedal, by automatically switching the motor to a low displacement mode, or by dumping the hydraulic fluid to tank, or switching-in a by-pass valve.

In the low speed sweeping or cleaning mode, the engine driving the hydraulic pump is arranged to be driven at an approximately constant engine speed, and variations in vehicle speed are obtained by varying the displacement of the pump driven by the engine. In the higher speed transit mode the arrangement is reversed so that the pump has a generally constant displacement and the vehicle engine is arranged to be varied in speed in order to vary vehicle speed. Change-over means is provided to effect this switch in transmission mode in an automatic fashion on-the-go without stopping the vehicle.

Thus, the vehicle can operate smoothly from the lowest possible speeds through to acceptably high transport speeds in a smooth progressive manner. This is achieved with very little extra cost in the transmission or braking system as an original equipment cost. Moreover, the mode of operation of the vehicle is entirely automatic, with stepless transmission between the two modes of operation. The advantages of both are retained, while legal requirements are met. All necessary change-overs are effected automatically in response to changes of vehicle speed, or speed-related functions such as change of pump or motor displacement in the hydrostatic transmission. In addition it is referred to claims 3 to 6.

Considering next the requirement for more precise and/or greater control over the steering of the vehicle, there is a known road-sweeping vehicle (EP-A-0347142) with four-wheel steering which provides an auxillary geerbox interposed in the drive shaft between the engine and driving wheels. The auxillary gearbox can operate in mechanical mode in which the forward part of the drive shaft is directly connected to the rear drive shaft for normal driving. The auxillary gearbox is operated in hydrostatic mode when the vehicle is carrying out sweeping/cleaning operations. In this mode, the forward drive shaft is used to drive a hydraulic pump which operates a transmission motor under control from the vehicle cab. The rear drive shaft is then driven by the transmission motor, thereby providing fine control at low vehicle speeds, without the need for an auxillary engine.

This known arrangement provides a very high degree of driver control over the steering system. Indeed, although a highly skilled driver may be able to operate the system satisfactorily, there is a very considerable danger that a less skilled operator may get into great difficulties due to interlocking the two steering systems with the wheels in improper alignment, for example. Equally, if the vehicle were operated at a transport speed with the rear wheel steering system still connected to the front wheel system, very great dangers would arise both for the vehicle itself and other road users.

Accordingly, a second aspect within above object of the present invention is to provide a cleaning vehicle offering improvements in relation to the provision of four wheel steer without the attendant dangers and inconveniences of previously proposed independent steering systems.

According to this second aspect of the present invention there is provided a cleaning vehicle as defined in claims 7 and 8 of the accompanying claims.

In a preferred embodiment of the invention, automatic means responsive to vehicle speed provides a variable degree of steering of said rearward wheels, said degree of steering being substantially zero when said vehicle is in its transport mode. Such a cleaning vehicle may incorporate computer control of the rear wheel steering system whereby differing degrees of rear wheel steer are automatically provided as between operation at low cleaning speeds and operation at higher transport speeds. At the latter speeds, substantially zero rear wheel steer is provided. Adjustment or change-over between the higher and lower degrees of rear wheel steer is effected automatically, and in conformity with vehicle speed, and in-line with the changes in wheel motor and braking system operating modes outlined above.

An embodiment of the invention will now be described by way of example with reference to the accompanying drawings in which:
Fig. 1 shows, diagramatically, a plan view of the cleaning vehicle with the rear engine and an associated hydraulic drive system indicated, together with certain other control systems; and

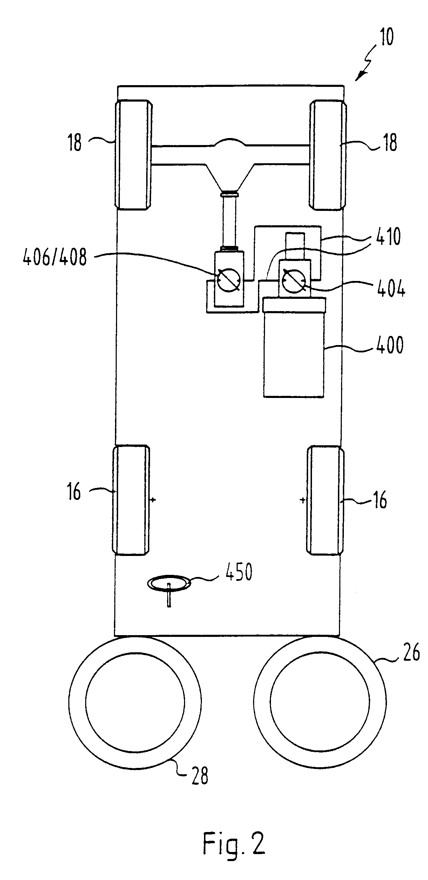

Fig. 2 shows the hydrostatic drive system of Fig. 1 modified in accordance with the drive system of the vehicle of the above embodiments.

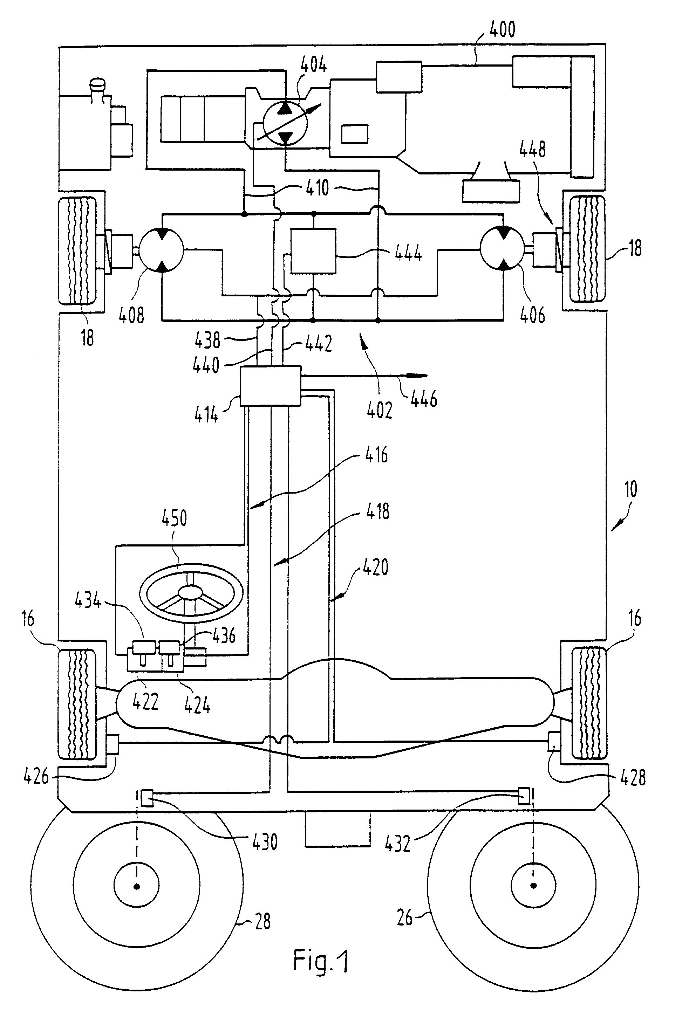

Fig. 1 is a diagrammatic representation of a vehicle 10 having a front beam axle, a rear transverse engine, and individual wheel motors for the rear wheels.

As shown in Fig. 1, a power plant 400 in the form of a petrol or diesel engine is drivably connected to the rear wheels 18 by a hydraulic or hydrostatic transmission 402 comprising a hydraulic pump 404 driven by power plant 400, hydraulic motors 406, 408 connected to wheels 18, and hydraulic lines 410 interconnecting the pump and motors.

Control means is provided for the hydrostatic transmission 402 in the form of an electronic processor 414 having input signal feed lines 416, 418 and 420 providing signals from sensors 422, 424 and 426, 428 and 430, 432. These sensors sense respectively, movement of the driver's speed and brake control pedals 434, 436 (sensors 422, 424) and front wheel speed and steering angle (sensors 426, 42a) and brush mounting arm angle (sensors 430, 432). The output lines 438, 440 and 442 are connected respectively to the wheel motors 406, 408, the pump 404, and to a by-pass valve 444. A further output 446 is provided for connection to a steering control system (not shown) for the rear wheels 18.

A braking system for the ground wheels is provided and is controlled by the pedals 434, 436 in the driver's cab. The braking system comprises hydraulic braking means provided by the hydrostatic transmission. In addition, the braking system comprises further braking means providing additional braking effective to meet the requirements for emergency braking during cleaning operations. This further braking means includes the driver-operated foot pedal 436 which is connected through a hydraulic master and slave system to drum-type brakes mounted in the vehicle wheels.

The hydrostatic transmission 402 provides two modes of operation, namely a slow speed mode for cleaning operations and a higher speed mode for use when the vehicle is in transit between cleaning locations. Likewise, the braking means provides at least two corresponding modes of operation, namely a low speed mode for use during cleaning operations, and a higher speed mode for use when the vehicle is in transit. The low speed braking mode is provided by the hydraulic braking effect of the hydrostatic transmission itself, and the higher speed braking mode is provided by the further braking system actuated by the pedal 436 and its associated hydraulic control system.

Automatic change-over means is provided by processor 414 to change the transmission and the braking means from one mode to the other and vice versa, in response to changes in vehicle speed under the control of the driver. Such change-over could be effected purely in relation to vehicle speed sensed, or in automatic response to a drivereffected selection of a speed-related function (eg on the joystick or a speed-increasing kickdown function on the foot control pedal, or a manual pump/motor displacement change lever), or by a hybrid function of both. The vehicle's control system can be arranged to effect suitable automatic response to transit speed travel by eg parking the brushgear and vice versa.

In order to eliminate the hydrostatic braking effect of the transmission 402 at vehicle transit speeds, processor 414 is operative to switch by-pass valve 444 across the hydraulic lines 410, whereby the wheel motors 406, 408, can effectively free-wheel. Alternatively, the arrangement may be such that the hydraulic fluid (resistance to the flow of which would otherwise cause a braking effect) can be dumped to a reservorr when the driver lifts his foot from the control pedal 434 during transit. Another possibility is to arrange that during transit the motors remain in a low displacement (low resistance) mode, thereby reducing (but in some cases not entirely eliminating) the hydrostatic braking effect.

In order to switch the hydrostatic transmission itself between its low speed and higher speed modes, processor 414 has to effect a switch-over in the control arrangements whereby pedal 434 controls the displacement of pump 404 at generally constant engine speed during low speed use, and pedal 436 changes engine speed at generally constant pump displacement during transit use.

Control of the hydrostatic transmission and braking and steering systems is effected automatically by speed responsive means constituted by processor 414 utilizing speed signais from sensors 426, 428, whereby the processor is effective to change-over between the low and the higher speed modes of operation of the transmission and braking systems, without any specific driver intervention. In addition, a manually operable control may be provided in the driver's cab for actuation by the driver and connected to processor 414, the control providing single lever control of the transmission of the vehicle in the manner of the control of a conventional transmission of an automobile having an internal combustion engine and a torque converter/planetary gear train transmission.

Turning now to the steering arrangements, the forward steering wheels 16 are provided with a conventional Steering wheel 450. The rear steerable wheels 18 are provided with a similar steering control system so far as the mechanical mounting and pivoting arrangements for the wheels are concerned. However, the control of the rear wheel steering is effected by the driver's steering wheel indirectly through automatic control means provided in processor 414 which is responsive to vehicle speed and to the steering movements of front wheels 16 as sensed by sensors 426, 428. The degree of steer of the rear wheels varies in accordance with vehicle speed. In low speed transit mode the degree of rear wheel steer is maximum, as required for vehicle manoeuvrability. The degree of rear wheel steer at transit speeds is zero or substantially zero. Change-over between the two modes of steering is effected automatically in response to vehicle speed. For extreme manoeuvrability, the rear wheels are steered in the opposite sense to the forward wheels.

In use, the control of vehicle 10 is extremely simple. During low speed sweeping operations the hydrostatic transmission provides the advantages of fine control of vehicle speed. In addition the rear wheel steering, automatically effected under computer control, ensures that very tight turning circles can be achieved. Moreover, when sweeping around short radius bends, it is easier for the driver to maintain the vehicle body precisely where he requires it in relation to the adjacent edge of the road, than with a two-wheel steer vehicle. When he then reverts to a higher speed transit mode, the danger of overlooking the requirement to disconnect the rear wheel steer is cut out as soon as the vehicle speed rises sufficiently to render such steering undesirable. The rear wheels are then maintained in the straight ahead position.

When the driver increases vehicle speed for transit purposes, the hydrostatic transmission automatically changes to its higher speed mode at the appropriate vehicle speed, and likewise the processor makes a corresponding response to eliminate hydrostatic braking when the driver lifts his foot from control pedal 434. When he does so, significant hydrostatic braking is not applied to the vehicle. The separate braking system controlled by pedal 436 provides normal braking at transit speeds and emergency braking at sweeping speeds.

Control of all these operations is effected by processor 414 with driver intervention by means of the control lever where he desires to do so.

Interestingly, in the above embodiment, the cleaning vehicle has been provided with the desired transport speed and associated functions without the expense of an additional transmission. Moreover, the step of switching the transmission from one speed range to another is effected automatically, and likewise the arrangement for eliminating and re-establishing hydrostatic braking. The provisions of the legally required braking systems for transit speeds has been achieved with little more expense than was associated with the previously required emergency braking system, and thus the entire transport and braking system has been provided without substantially increased equipment costs. Four wheel steering has likewise been provided, in a safe manner, utilizing the vehicle's control systems to vary the degree of rear wheel steer in accordance with vehicle speed, using the speed sensing and control equipment in a simple manner alongside the parallel equipment provided for braking and transmission control.

Vehicle speed sensing could be achieved by monitoring a speed-related function such as motor and/or pump displacement in the hydrostatic transmission or, for example, by monitoring a driver control function such as a kickdown function provided on the motor control foot pedal.

## Claims

1. A self-propelled cleaning vehicle having a hydrostatic transmission providing a low speed mode and a higher speed mode, and further braking means characterized in that
the vehicle comprises speed-responsive automatic change-over means to change the braking control of the vehicle between that offered by the transmission and that of the further braking means, in accordance with vehicle speed.

2. A self-propelled driver-operated cleaning vehicle for street sweeping and/or street washing operations and/or the like, the vehicle comprising:
a) ground wheels (16, 18);
b) a vehicle body mounted on said ground wheels (16, 18);
c) said ground wheels (16, 18) including driven wheels (18) and steerable wheels (16);
d) a power plant (400) drivably connected to said driven wheels (18) by a drive transmission;
e) said drive transmission being a hydraulic transmission comprising a hydraulic pump (404) drivable by said power plant (400), a hydraulic motor (406, 408) drivably connected to at least one driven wheel (18), and hydraulic lines (410) interconnecting said pump and motor;
f) said hydraulic transmission is controlled by control means operable by the driver to increase or decrease the power transmitted to said driven wheels (18), said hydraulic transmission being applied such as to give a braking effect to said driven wheels (18) upon the driver moving said control means in a power-decreasing manner;
g) said hydraulic motor (406, 408) providing at least two modes of operation, namely a low speed mode and a higher speed mode and said motor (406, 408) being switchable from one mode to the other on-the-go;
characterized in that
h) said vehicle further comprises friction braking means providing an additional braking system for higher speed transit whilst not in cleaning operation and
i) automatic change-over means being provided to change the braking mode from that created by said hydraulic transmission to the friction braking mode created by said additional braking system and said motor (406, 408) mode of operation either in response to changes in vehicle speed or selection of speed-related functions.

3. A vehicle according to claim 2,
characterized in that
said automatic change-over means causes a by-pass valve (444) to be connected across said hydraulic motor (406, 408) when said vehicle is operated in said higher speed mode, whereby said hydraulic motor (406, 408) can effectively free-wheel.

4. A vehicle according to claim 2,
characterized in that
said automatic change-over means causes said hydraulic motor (406, 408) to remain in a low displacement (low resistance) mode when said vehicle is operated in said higher speed mode, thereby reducing the hydrostatic braking effect.

5. A vehicle according to claim 2,
characterized in that
said automatic change-over means also automatically changes said hydraulic motor (406, 408) between its low speed and higher speed modes of operation without specific driver intervention.

6. A vehicle according to claim 2,
characterized in that
control means is provided for actuation by the driver and connected to said automatic change-over means and providing single-lever direct control of the transmission of the vehicle.

7. A vehicle according to any one of claims 2 to 6, whereby said ground wheels comprise forward steerable wheels and rearward steerable wheels, and steering control means provides simultaneous control of the steering of both said forward and rearward wheels,
characterized in that
automatic means responsive to vehicle speed provides a variable degree of steering of said rearward wheels, said degree of steering being substantially zero when said vehicle is in its transport mode.

8. A cleaning vehicle having a hydrostatic transmission providing a low speed mode and a higher speed mode, and having both forward and rearward steerable wheels,
characterized in that
automatic means are provided to vary the degree of steering of said rearward wheels in response to variation of vehicle speed, so said degree of steering is substantially zero when the vehicle is in a higher speed transport mode.

## Patentansprüche

1. Reinigungsfahrzeug mit Selbstantrieb, mit einer hydrostatischen Kraftübertragung, die einen langsamen und einen schnellen Geschwindigkeitsbetrieb zur Verfügung stellt, und mit einer weiteren Bremseinrichtung,
dadurch gekennzeichnet,
daß das Fahrzeug ein automatisches, der Geschwindigkeit entsprechendes Umschaltmittel umfaßt, um die Bremssteuerung des Fahrzeuges zwischen der von der Kraftübertragung bereitgestellten und der der weiteren Bremseinrichtung in Übereinstimmung mit der Fahrzeuggeschwindigkeit umzuschalten.

2. Reinigungsfahrzeug mit Selbstantrieb und Fahrerbedienung für Straßenkehr- und/oder Straßenwaschvorgänge und/oder ähnliches, das Fahrzeug umfaßt:
a) Bodenräder (16, 18);
b) einen Fahrzeugrahmen, der auf den Bodenrädern (16, 18) befestigt ist;
c) die Bodenräder (16, 18), die Antriebsräder (18) und lenkbare Räder (16) beinhalten;
d) eine Antriebsmaschine (400), die durch eine Antriebskraftübertragung mit den Antriebsrädern (18) antreibbar verbunden sind;
e) die Antriebskraftübertragung, welche eine hydraulische Kraftübertragung ist, die eine durch die Antriebsmaschine (400) antreibbare Hydraulikpumpe (404), einen Hydraulikmotor (406, 408), der mit mindestens einem der Antriebsräder (18) antreibbar verbunden ist und Hydraulikleitungen (410), die die Pumpe mit dem Motor miteinander verbinden, aufweist;
f) die hydraulische Kraftübertragung, die von durch den Fahrer bedienbaren Steuerungsmitteln gesteuert wird, um die zu den Antriebsrädern (18) übertragene Antriebskraft zu erhöhen oder zu verringern, wobei die hydraulische Kraftübertragung so angewendet wird, um eine Bremswirkung an die Antriebsrädern (18) zu übertragen, nachdem der Fahrer das Steuerungsmittel in eine Betriebsart zur Kraftverringerung bewegt hat;
g) den Hydraulikmotor (406, 408), der mindestens zwei Betriebsarten zur Verfügung stellt, nämlich einen langsamen und einen schnellen Geschwindigkeitsbetrieb, und wobei der Hydraulikmotor (406, 408) während des Betriebes von einem Betrieb zum anderen umschaltbar ist;
dadurch gekennzeichnet, daß
h) das Fahrzeug weiterhin ein Reibungsbremsmittel umfaßt, das ein zusätzliches Bremssystem für eine schnellere Geschwindigkeitsüberführung außerhalb des Reinigungsvorganges zur Verfügung stellt, und
i) ein automatisches Umschaltmittel vorgesehen ist, um den Bremsbetrieb, der durch die hydraulische Kraftübertragung erzeugt wird, auf den Reibungsbremsbetrieb umzuschalten, der durch das zusätzliche Bremssystem und die Betriebsart des Hydraulikmotors (406, 408) erzeugt wird, entweder als Reaktion auf Geschwindigkeitsänderungen des Fahrzeuges oder als Reaktion auf eine Auswahl von geschwindigkeitsbezogenen Funktionen.

3. Reinigungsfahrzeug nach Anspruch 2,
dadurch gekennzeichnet,
daß das automatische Umschaltmittel ein Ableitventil (444) betätigt, um eine Querverbindung mit dem Hydraulikmotor (406, 408) herzustellen, wenn das Fahrzeug in dem schnellen Geschwindigkeitsbetrieb betrieben wird, wodurch der Hydraulikmotor (406, 408) effizient freilaufen kann.

4. Reinigungsfahrzeug nach Anspruch 2,
dadurch gekennzeichnet,
daß das automatische Umschaltmittel den Hydraulikmotor (406, 408) dazu veranlaßt in einem Betriebszustand mit niedriger Verdrängung (kleinem Widerstand) zu verbleiben, wenn das Fahrzeug in dem schnellen Geschwindigkeitsbetrieb betrieben wird, wodurch die hydrostatische Bremswirkung reduziert wird.

5. Reinigungsfahrzeug nach Anspruch 2,
dadurch gekennzeichnet,
daß das automatische Umschaltmittel ebenfalls den Hydraulikmotor (406, 408) zwischen seinem langsamen und seinen schnellen Geschwindigkeitsbetrieben ohne ein spezifisches Eingreifen des Fahrers umschaltet.

6. Reinigungsfahrzeug nach Anspruch 2,
dadurch gekennzeichnet,
daß ein Steuerungsmittel vorgesehen ist, das durch den Fahrer zu betätigen ist und mit dem automatischen Umschaltmittel verbunden ist und das eine direkte Einhebelsteuerung der Kraftübertragung des Fahrzeuges zur Verfügung stellt.

7. Reinigungsfahrzeug nach jedem der Ansprüche 2 bis 6, bei denen die Bodenräder lenkbare Vorderräder und lenkbare Hinterräder umfassen, und bei denen eine Lenksteuerungseinrichtung eine gleichzeitige Lenkungssteuerung beider Vorder- und Hinterräder ermöglicht,
dadurch gekennzeichnet,
daß eine auf die Fahrzeuggeschwindigkeit ansprechende Automatikeinrichtung einen variablen Lenkwinkel der Hinterräder zur Verfügung stellt, wobei der Lenkwinkel im wesentlichen Null beträgt, während sich das Fahrzeug in seinem Transportbetrieb befindet.

8. Reinigungsfahrzeug, das eine hydrostatische Kraftübertragung aufweist, die einen langsamen und einen schnellen Geschwindigkeitsbetrieb zur Verfügung stellt, und das sämtliche lenkbare Vorder- und Hinterräder aufweist,
dadurch gekennzeichnet,
daß automatische Einrichtungen zur Verfügung gestellt werden, um den Lenkwinkel der hinteren Räder in Abhängigkeit von einer Änderung der Fahrzeuggeschwindigkeit zu verändern, wobei der Lenkwinkel im wesentlichen Null beträgt, während sich das Fahrzeug in seinem schnellen Transportbetrieb befindet.

## Revendications

1. Véhicule de nettoyage automoteur ayant une transmission hydrostatique fournissant un mode à faible vitesse et un mode à vitesse élevée, et un moyen de freinage additionnel,
caractérisé en ce que :
le véhicule comprend un moyen automatique de changement, sensible à la vitesse, pour modifier la commande du freinage du véhicule entre celle offerte par la transmission et celle du moyen de freinage additionnel, en fonction de la vitesse du véhicule.

2. Véhicule de nettoyage automoteur, actionné par le conducteur, pour le balayage des rues et/ou le lavage des rues, et/ou analogue, le véhicule comprenant :
a) des roues au sol (16, 18);
b) une caisse de véhicule montée sur lesdites roues au sol (16, 18);
c) lesdites roues au sol (16, 18) comprenant des roues menées (18) et des roues orientables (16);
d) un groupe générateur d'énergie (400) connecté de manière motrice auxdites roues menées (18) par une boîte de vitesses;
e) ladite boîte de vitesses étant une boîte hydraulique comprenant une pompe hydraulique (404) pouvant être entraînée par ledit groupe générateur d'énergie (400), un moteur hydraulique (406, 408) connecté de matière motrice à au moins une roue menée (18), et des conduites hydrauliques (410) interconnectant lesdits pompe et moteur;
f) ladite boîte de vitesses est commandée par un moyen de commande pouvant être actionné par le conducteur afin d'augmenter ou de diminuer l'énergie transmise auxdites roues menées (18), ladite boîte de vitesses hydraulique étant appliquée de façon à conférer un effort de freinage auxdites roues menées (18) lorsque le conducteur déplace ledit moyen de commande d'une façon provoquant une diminution d'énergie;
g) ledit moteur hydraulique (406, 408) fournissant au moins deux modes de fonctionnement, à savoir un mode à faible vitesse et un mode à vitesse élevée et ledit moteur (406, 408) pouvant passer d'un mode à l'autre sur le champ;
caractérisé en ce que :
h) ledit véhicule comporte en outre un moyen de freinage par friction fournissant un système de freinage additionnel pour un transport à haute vitesse alors qu'il ne procède pas à une opération de nettoyage et
i) un moyen de changement automatique étant prévu pour modifier le mode de freinage et le faire passer de celui créé par ladite boîte de vitesses hydraulique au mode de freinage par friction créé par ledit système de freinage additionnel et ledit mode de fonctionnement du moteur (406, 408) soit en réponse aux changements de la vitesse du véhicule soit à la sélection de fonctions liées à la vitesse.

3. Véhicule selon la revendication 2, caractérisé en ce que :
ledit moyen de changement automatique provoque le branchement d'une soupape de dérivation (444) aux bornes dudit moteur hydraulique (406, 408) lorsque ledit véhicule fonctionne dans ledit mode à vitesse élevée, d'où il résulte que ledit moteur hydraulique (406, 408) peut effectivement fonctionner en roue libre.

4. Véhicule selon la revendication 2, caractérisé en ce que :
ledit moyen de changement automatique provoque le maintien dudit moteur hydraulique (406, 408) dans un mode à faible déplacement (faible résistance) lorsque ledit véhicule fonctionne dans ledit mode à vitesse élevée, d'où il résulte la réduction de l'effet du freinage hydrostatique.

5. Véhicule selon la revendication 2, caractérisé en ce que :
ledit moyen de changement automatique fait passer également de manière automatique ledit moteur hydraulique (406, 408) entre son mode de fonctionnement à faible vitesse et son mode de fonctionnement à vitesse élevée sans intervention spéciale du conducteur.

6. Véhicule selon la revendication 2, caractérisé en ce que :
un moyen de commande est prévu pour être actionné par le conducteur, qui est relié audit moyen de changement automatique et fournit une commande directe par un simple levier de la boîte de vitesses du véhicule.

7. Véhicule selon l'une quelconque des revendications 2 à 6, dans lequel lesdites roues au sol comprennent des roues orientables avant et des roues orientables arrière, et un moyen de commande du braquage fournit une commande simultanée du braquage tant desdites roues avant que desdites roues arrière,
caractérisé en ce que :
un moyen automatique répondant à la vitesse du véhicule confère un degré variable du braquage desdites roues arrière, ledit degré du braquage étant sensiblement nul lorsque ledit véhicule se trouve dans son mode de transport.

8. Véhicule de nettoyage comportant une transmission hydrostatique conférant un mode à faible vitesse et un mode à vitesse élevée, et comportant des roues orientables tant avant qu'arrière,
caractérisé en ce que :
des moyens automatiques sont prévus pour faire varier le degré du braquage desdites roues arrière en réponse à la variation de la vitesse du véhicule, de sorte que ledit degré du braquage est sensiblement nul lorsque le véhicule se trouve dans le mode de transport à vitesse élevée.
